(19) Europäisches Patentamt
European Patent Office
Office européen des brevets

(11) Publication number: 0 122 079
B1

(12) EUROPEAN PATENT SPECIFICATION

(45) Date of publication of patent specification: 20.04.88

(51) Int. Cl.$^4$: H 01 B 1/12

(21) Application number: 84301980.3

(22) Date of filing: 23.03.84

# (54) Conducting polymers.

(30) Priority: 06.04.83 GB 8309362

(43) Date of publication of application:
17.10.84 Bulletin 84/42

(45) Publication of the grant of the patent:
20.04.88 Bulletin 88/16

(84) Designated Contracting States:
DE FR GB IT NL SE

(56) References cited:
EP-A-0 016 305
EP-A-0 076 605

(73) Proprietor: IMPERIAL CHEMICAL INDUSTRIES PLC
Imperial Chemical House Millbank
London SW1P 3JF (GB)

(72) Inventor: Ballard, Denis George Harold
The Old Coach-House 34A Tarvin Road
Littleton Chester (GB)
Inventor: Moran, Kenneth Thomas
22 Allendale Greenhouse Farm Estate
Runcorn Cheshire (GB)
Inventor: Shirley, Ian Malcolm
19 Long Meadow
Weaverham Cheshire (GB)

(74) Representative: Thomas, Ieuan et al
Imperial Chemical Industries PLC
Legal Department: Patents PO Box 6
Bessemer Road Welwyn Garden City
Herts, AL7 1HD (GB)

EP 0 122 079 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the use of polyarylenes in electrical and electronic applications.

Electrically conducting compositions derived from polyphenylene are known.

We have now devised electrically conducting compositions which comprise certain polyarylenes described in our copending European patent application No. 82305028.1 (EP—A1—0076605), the disclosure of which is incorporated herein, and suitable doping agents.

By "electrically conducting composition" we mean a composition which has a direct current conductively of at least $10^{-5}$ $ohm^{-1}$ $cm^{-1}$ when measured by the four-probe method at room temperature.

By "four-probe method" we mean the known and accepted art method of measuring the electrical conductivity of a polymeric film or material using either A.C. or D.C. current between four contacts as described in, for example, Journal of the American Chemical Society 1978, *100*, pages 1014—[illegible].

According to the present invention there is provided a process for the preparation of a composition having a direct current conductivity of at least $10^{-5}$ $ohm^{-1}$ $cm^{-1}$ measured by the four-probe method at room temperature which process comprises the steps of (A) treating a polymerisable composition which comprises a 1,2-disubstituted-cyclohexa-3,5-diene under polymerisation conditions for the polymerisable composition, which 1,2⁻ substituents, which may be the same or different, are not hydroxy groups and do not unduly inhibit the polymerisation of the polymerisable composition and are selected from acyloxy, carbonate, alkoxy, amide, halide, thioester, urethane and xanthate substituents; (B) treating the polymer prepared in step A which has 1,2-disubstituted-cyclohexenylene rings in the polymer backbone to eliminate the 1,2-substituents and convert the cyclohexenylene rings into arylene rings; and (C) doping the polyarylene prepared in step B with a doping agent selected from the group consisting of Group IA metals, Group IA metal arenes, Bronsted acids, non-metal oxides, Group VB sulphides, and halides of Groups VB, VI A, IB, IIIB, IVB and the inert gases.

Arylene homo- or co-polymers of which electrically conducting compositions prepared by the process according to the present invention are comprised preferably have structures represented by the general formula

$$-\!\left(Ar\right)_n\!\!-\!\!-\!\!-\!\left(X\right)_m\!-$$

wherein the residues Ar and X, where X is present, may vary from unit to unit in the polymer chain, Ar represents a divalent aromatic or substituted aromatic group, X is a residue of one or more polymerisable comonomers as hereinafter defined, n and m are whole numbers or m is 0 and the ratio of n:m lies in the range 1:0 to 1:100.

The 1,2-disubstituted-cyclohexa-3,5-diene homo- or co-polymer used in the process according to the present invention preferably has a structure represented by the general formula

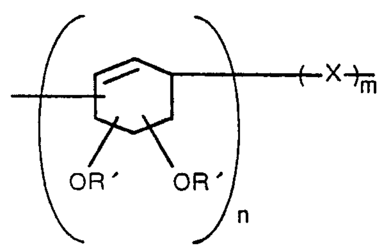

II

wherein the cyclohexenylene ring and the residue X, where X is present, may vary from unit to unit along the polymer chain; each R′, which may be the same or different, is hydrogen, hydrocarbyl, e.g. lower alkyl having up to five carbon atoms, aroyl, alkanoyl having up to ten carbon atoms, or preferably $R^2OCO$, where $R^2$ is aryl or an alkyl group having up to ten carbon atoms, preferably one or two carbon atoms; X, n and m have the meanings hereinbefore ascribed to them.

By "polymerisable comonomer" we mean a compound which can be reacted under polymerisation conditions with a 1,2-disubstituted-cyclohexa-3,5-diene which has 1,2-substituents as herein defined to form a copolymer therewith.

Examples of suitable polymerisable comonomers the residues of which may be present in copolymers of general formula I or II include *inter alia* vinyl monomers, for example, olefinic hydrocarbons, e.g. styrene, methacrylates, vinyl halides, vinyl esters, acrylonitrile and tetrafluoroethylene; and compounds such as sulphur dioxide.

In polymers of general formula I, Ar is preferably a phenylene ring. The linkages by which the phenylene rings are bonded in the polymer backbones may be ortho or para to each other, and it is often preferred that a majority of the linkages are para.

In polymers of general formula II, the polymer backbone preferably comprises both cyclic ring

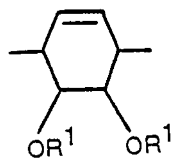

and cyclic ring.

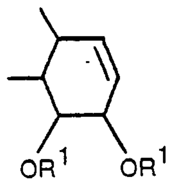

The 1,2-substituents in the poly(1,2-disubstituted-cyclohexa-3,5-diene) which are used in the process of the present invention are conveniently *cis* to each other since such polymers may be derived from *cis*-1,2-dihydroxycyclo-hexa-3,5-dienes which may be readily prepared by bio-chemical processes as is more fully described in our European patent application Publication No. 76606A. However, we do not exclude the possibility that the aforesaid substituents may be *trans* to each other, since such systems may be readily converted into polyarylenes as shown in our European patent application No. 82305028.1.

As additional, non-preferred, examples of the aforesaid 1,2-substituents may be mentioned *inter alia* amide, halide, thioester, urethane and xanthate.

By "suitable doping agent" we mean electron donor or acceptor materials, or mixtures thereof, which are known to be useful in increasing the conductivity of organic materials.

As examples of suitable doping agents of which electrically conducting compositions according to the present invention may be comprised may be mentioned *inter alia* electron donor agents such as Group IA metals, e.g. lithium, sodium, potassium and Group IA metal arenes, e.g. sodium and potassium naphthalene and sodium and potassium biphenyl; and electron acceptor agents such as Bronsted acids, e.g. $HClO_4$; non-metal oxides, e.g. $SO_3$ and $N_2O_5$, Group VB sulphides, e.g. $Sb_2S_5$, halides of Groups VB, VIA, IB, IIIB, IVB and the inert gases, e.g. $SbCl_5$, $SbF_3Cl_2$, $AsF_5$, $PF_5$, $CrO_2Cl_2$, $CrO_2F_2$, $FeCl_3$, $MoCl_5$, $CuCl_2$, $BCl_3$, $SnCl_4$, and $XeF_4$.

All references to the Periodic Table are to the Periodic Table of Elements in "Advanced Inorganic Chemistry" Third Edition, 1972, by Cotton and Wilkinson, Interscience.

The type of doping agent chosen depends upon the electronic characteristics desired in the electrically conducting composition of the present invention. Electron donor materials provide an n-type electrically conducting composition of the present invention. Electron acceptor materials provide a p-type electrically conducting composition (hole conductivity).

The interface between electron donor-doped and acceptor-doped compositions provides an n-p junction which can serve, for example, as a rectifier.

The concentration of doping agent in the electrically conducting compositions prepared by the process of the present invention is from about $10^{-5}$ to 0.5 mole per mole of arylene unit in the polyarylene, and preferably $10^{-3}$ to 0.1.

The poly(1,2-disubstituted-cyclohexa-3,5-dienes) used in the process of the present invention may be prepared as is more fully described in our aforesaid European patent application No. 82305028.1 (EP—A1—0076605).

Certain of the 1,2-disubstituted-cyclohexadienes for use in step A of the process of the first aspect of the present invention may often be obtained via a biological pathway. For example *cis*-1,2-dihydroxycyclo-hexa-3,5-dienes may be prepared by suitable micro-organisms, e.g. a mutant strain of *Pseudomonas putida* as is more fully described in our European patent specification No. 0,076,606A and the hydroxy groups thereof can be converted into suitable derivatives, e.g. ester and carbonate derivatives, by techniques well known in the art. For example, the ester derivatives can be prepared by reacting the aforesaid dihydroxy compounds with acyl halides or acyl anhydrides. For ease of polymerisation, the ester or carbonate derivatives are preferably used in the first aspect of the present invention.

Whilst the 1,2-disubstituted-cyclohexadiene derivatives which are used in step A of the process of the first aspect of the present invention are conveniently obtained via a biochemical pathway we do not exclude the possibility that they may be obtained by conventional organic synthesis or that the 1,2-substituents may be *trans*. For example, United States Patent Specification No. 3,755,080 describes the microbial conversion of naphthalenes to 1,2-dihydro-1,2-*trans*-di-hydroxy derivatives thereof using a Nocardia species of bacteria; Nakajima, et al. describe the chemical synthesis of *cis*- and *trans*-1,2-dihydroxycyclohexane-3,5-diene in Chemische Berichte, 1959, Volume 92, pages 163—172 and 1956, Volume 89, pages 2224—9 respectively; and Platt et al describe the chemical synthesis of *trans*-1,2-diacetoxycyclo-hexa-3,5-diene in Synthesis, 1977, Volume 7, pages 449—50.

The polymerisation process used in step A of the first aspect of the present invention may be initiated by conventional olefin polymerisation catalysts and free radical initiation is preferred.

The polymerisation process used in step A of the first aspect of the present invention may be effected on a neat polymerisable composition; on a solution of the polymerisable composition in a suitable organic solvent, for example a hydrocarbon, e.g. toluene and benzene, a halohydrocarbon, e.g. 1,1,2-trichloro-1,2,2-trifluoroethane, a ketone, e.g. acetone and methyl ethyl ketone, or an ester e.g. ethyle acetate; or on a suspension, dispersion or emulsion of the polymerisable composition which may be in aqueous media, e.g. water, or in a suitable organic liquid, e.g. perfluoromethyldecalin, benzene or tetrafluoroethylene tetramer. Preferably the polymerisation is carried out on neat 1,2-disubstituted-cyclohexa-3,5-diene or a homologue or analogue thereof or in the presence of a suitable organic liquid.

The temperature at which the polymerisation step A in the process of the first aspect of the present invention is carried out depends *inter alia* on the thermal stability of the 1,2-disubstituted-cyclohexa-3,5-diene and typically is carried out in the range 283°K (10°C) to 373°K (100°C).

The polymerisable composition used in step A of the process of the first aspect of the present invention may comprise one or more of the aforesaid cyclohexadiene derivatives and one or more polymerisable comonomers. Where one or more polymerisable comonomers is/are present it/they may provide up to 99 mole% of the polymeric product. For example, where the polymerisable comonomer is styrene we have prepared copolymers which have a styrene content which varies from 1 to 99 mole%.

Where, in polymers of general formula II the groups $R^1$ represent hydrogen, such polymeric compositions can be prepared by hydrolysis of, for example, the corresponding ester- substituted polymer. Techniques for effecting such hydrolysis are well known in the art.

Although we do not exclude the possibility that polyarylenes may be prepared in step B of the process according to the present invention by treating the polymeric composition comprising a polymer of general formula II in solution in a suitable solvent, e.g. squalane or sulpholane, it is often preferred that a neat polymeric composition comprising a polymer of general formula II is employed.

Whilst the preparation of polyarylenes may be effected by treating the polymeric composition of general formula II with a suitable reagent, often subjecting the aforesaid polymeric composition to a suitable heat treatment is sufficient to effect aromatisation. Suitable heat treatments typically comprise heating the aforesaid polymeric composition for several hours at a temperature of, for example, 373°K to 573°K (100°C to 300°C). It will be appreciated that the exact conditions used will depend on the particular polymeric composition which is used and on the substituent groups which are being eliminated. For example, where acetate groups are being eliminated a temperature in the range 533°K to 563°K (260°C to 290°C) is often convenient; where benzoate groups are being eliminated a temperature in the range 553°K to 593°K (280°C to 320°C) is often convenient; where methyl carbonate groups are being eliminated a temperature about 523°K (250°C) is often convenient. It is preferred that carbonate groups are eliminated since such elimination can be effected at lower temperatures. Where carbonate groups are eliminated elimination is preferably effected in the presence of a suitable reagent. As examples of suitable reagents we would mention metal salts, e.g. halides of alkaline earth metals, e.g. potassium bromide, and bases of alkaline earth metals e.g. potassium methoxide and potassium hydroxide or preferably in the presence of an organic amine, particularly preferably an alkylamine in which the alkyl group has up to ten carbon atoms, more particularly preferably a tertiary alkylamine, e.g. tri-n-octylamine, as is more fully described in our European Patent Application No. 83305174.1 (EP—A—0107895).

Where an organic amine is used in the step B of the process of the present invention it is preferably a weak nucleophile and a strong base (by which we mean it has pKa of more than 7 and preferably more than 10) and more preferably is readily volatilised under suitable conditions.

The presence of bulky groups in the organic amine tends to sterically hinder its attack on carbon centres and hence reduces its nucleophility.

The amine used in step B in the process of the present invention may be a primary amine, a secondary amine or a tertiary amine. The hydrocarbyl groups in the amine may be alkyl, aryl, alkaryl or aralkyl and where a plurality of hydrocarbyl groups are present, i.e. the amine is a secondary or tertiary amine, the hydrocarbyl groups may be the same or different.

As examples of suitable amines may be mentioned, *inter alia* ethylamine, laurylamine, hexamethylenediamine, ethylenediamine, 4,4'-diaminodiphenylmethane, di-n-octylamine, di-isopropylamine, piperidine, pyridine, bipyridyl.

It is often preferred that the amine is a tertiary amine, for example a tertiary alkyl amine $R^1{}_3N$ (where $R^1$, each of which may be the same or different, is an alkyl group having one to 12 carbon atoms e.g. n-butyl or n-octyl) or an alkylarylamine, e.g. 1,8-bis-dimethylaminonaphthalene.

Where an organic amine is used in step B of the process of the present invention it will have a volility such that sufficient remains in the polymer during step B to catalyse the desired elimination and may be readily removed from the polymer, where removal is desired, by increasing the temperature and/or decreasing the pressure after catalysis is complete. However, we do not exclude the possibility that removal may be effected by a suitable solvent treatment. Typically the amine has a boiling point at ambient pressure in the range 200°C to 600°C.

In the process according to the present invention the doping step may be carried out by any of the processes known in the electronics art for doping polymers with suitable dopants. As examples of such processes may be mentioned *inter alia* addition of the doping agent from the gas phase, mixing of doping agent and polyarylenes in the solid or melt phase, or preferably deposition of the doping agent from

solution or electrochemically.

Where, in the process according to the present invention, the polyarylene is treated with a solution of a suitable doping agent the solvent therefor is preferably a polar aprotic solvent (a) in which the doping agent can be dissolved to form a concentrated solution and (b) to which the polyarylene is substantially inert, e.g. it is essentially insoluble therein. As examples of suitable solvents may be mentioned *inter alia* dioxan, diglyme, N,N-dimethylformamide and preferably nitromethane. The concentration of the aforesaid solution is typically between 5% w/w and 10% w/w.

Where, in the process according to the present invention, the polyarylene is treated with a solution of suitable doping agent treatment is typically carried out for between a few minutes and tens of hours, and conveniently is carried out at ambient temperature.

The polymers used in the process according to the present invention and electrically conducting compositions according to the present invention may be in a variety of forms. For example, they may be particulate, fibrous, in the form of a three-dimensional solid or preferably in the form of a substantially continuous two-dimensional solid, e.g. a film or coating.

Where the electrically conducting composition according to the present invention is a substantially continuous two-dimensional solid it may be in the form of a self-supporting layer, e.g. a film, typically having a thickness between 10 and 200 micrometres, or a coating or encapsulating layer, typically having a thickness of up to a few micrometres, on a suitable substrate, e.g. glass or a metal.

By the process of the present invention, particularly procedure B, continuous films and coatings of electrically conducting compositions comprising a polyarylene and a suitable dopant which have a greater surface area than hitherto known films and coatings of electrically conducting polyphenylene compositions can often be prepared.

The present invention is further illustrated with reference to the following examples.

Examples 1—3

A solution of poly(*cis*-1,2-dipivaloxycyclohexa-3,5-diene) (7.5 grams), prepared as described in Example 34 of European patent Publication No. 76605, in squalane (500 ml) was heated under nitrogen at reflux for 6 hours. An increasing quantity of a pale yellow precipitate was produced over the duration of the experiment. The mixture was cooled, filtered, washed with pentane and dried to leave polyphenylene powder.

Samples (200 mgs) of the polyphenylene powder were treated with clear portions (15 mls) of a solution, obtained by dissolving ferric chloride (5 grams) in nitromethane (80 mls) and allowing the mixture to stand overnight, in a nitrogen atmosphere for defined periods of time; within a couple of minutes the polyphenylene turned black. The products were filtered off, washed with nitromethane, dried under vacuum, and their chemical compositions determined.

The products were separately pressed into discs (15 mm diameter, 1 mm thick) and the electrical conductivity thereof was measured using a conventional 4-point probe technique. The results are given in Table 1.

TABLE 1

| Example No. | Reaction Time | Conductivity ($ohm^{-1}$ $cm^{-1}$) | Empirical Formula |
|---|---|---|---|
| 1 | 2 mins | $0.12 \times 10^{-2}$ | $[C_6H_{4.46}(FeCl_{4.05})0.070]_x$ |
| 2 | 3 hrs | $1.1 \times 10^{-2}$ | $[C_6H_{4.7}(FeCl_{4.1})0.078]_x$ |
| 3 | 20 hrs | $1.5 \times 10^{-2}$ | $[C_6H_{4.2}(FeCl_4)0.102]_x$ |

Example 4

A solution of poly(bis-methylcarbonate of cis-1,2-dihydroxycyclohexa-3,5-diene) (5 grams), and tri-n-octylamine (300 microlitres) in 1,4-dioxan (30 mls) was spin coated onto a glass microscope slide at 3000 rpm to give a colourless coating.

The coated slide was placed in an oven in a nitrogen atmosphere and the temperature was raised continuously over 1 hour to 410°C to produce a coating, 1.2 microns thick, of polyphenylene.

The microscope slide coated with polyphenylene was immersed in the ferric chloride solution described in Example 1 for 3 hours, it was then washed with quantities of nitromethane until no yellow colour was extracted from the coating. The slide was dried and the conductivity of the coating was found to be $10^{-3}$ to $10^{-4}$ $ohm^{-1}$ $cm^{-1}$ (determined using a four terminal procedure in a nitrogen atmosphere). In the four terminal procedure, one Keithly 610 electrometer was used to measure voltage and a second Keithly 610 electrometer was used to measure current; the electrodes comprised four parallel silver wires attached to the coating with silver paint.

Example 5

This Example describes the preparation of an electrically conducting polyphenylene composition by an electrochemical process in a nitrogen atmosphere.

In an electrochemical cell, the working electrode was a substantially colourless film of polyphenylene on a platinum coated glass slide measuring 1 cm × 2 cm (prepared as described in Example 4); the counter electrode was a thin platinum coil; the reference electrode was a silver wire; and the electrolyte was a 0.1 molar solution of lithium hexafluoroarsenate in propylene carbonate (distilled, dried over a molecular sieve and deoxygenated).

Current-potential curves indicated two anodic peaks, the first at +1.5v and the second at +2.0v versus the silver electrode, indicating the presence of oxidised polyphenylene with hexafluorarsenate anion acting as counterion. The colour of the polyphenylene film became dark brown to black.

**Claims**

1. A process for the preparation of a composition having a direct current conductivity of at least $10^{-5}$ $ohm^{-1}$ $cm^{-1}$ measured by the four-probe method at room temperature which process comprises the steps of:

A) treating a polymerisable composition which comprises a 1,2-disubstituted-cyclohexa-3,5-diene under polymerisation conditions for the polymerisable composition, which 1,2-substituents which may be the same or different, are not hydroxy groups and do not unduly inhibit the polymerisation of the polymerisable composition and are selected from acyloxy, carbonate, alkoxy, amide, halide, thioester, urethane and xanthate substituents;

B) treating the polymer prepared in step A which has 1,2-disubstituted-cyclohexenylene rings in the polymer backbone to eliminate the 1,2-substituents and convert the cyclohexenylene rings into arylene rings; and

C) doping the polyarylene prepared in step B with a doping agent selected from the group consisting of Group IA metals, Group IA metal arenes, Bronsted acids, non-metal oxides, Group VB sulphides, and halides of Groups VB, VI A, IB, IIIB, IVB and of the inert gases.

2. A process as claimed in claim 1 in which the 1,2-disubstituted-cyclohexa-3,5-diene which is used in step A has a structure represented by the general formula:

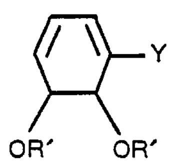

wherein each $R^1$, which may be the same or different is acyl or $R^2OCO$, where $R^2$ is aryl or an alkyl group having up to ten carbon atoms and Y is hydrogen, halogen, or an alkyl group having up to four carbon atoms.

3. A process as claimed in one of the preceding claims wherein the polymerisable composition comprises a polymerisable comonomer which can be reacted under polymerisation conditions with a 1,2-disubstituted-cyclohexa-3,5-diene which has 1,2-substituents as defined in Claim 1 to form a copolymer therewith.

4. A process as claimed in claim 3 wherein the polymerisable comonomer is methyl methacrylate, styrene or acrylonitrile.

5. A process as claimed in any of the preceding claims wherein the polymer which is used in step B and which has 1,2-disubstituted-cyclohexenylene rings in the polymer backbone has a structure which may be represented by the general formula:

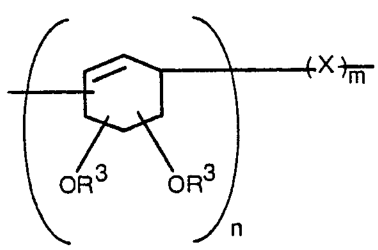

wherein the cyclohexenylene rings and the residue X, where X is present, may vary from unit to unit along the polymer chain;

$R^3$, each of which may be the same or different, is hydrogen, acyl or $R^2OCO$ where $R^2$ is aryl or an alkyl group having up to ten carbon atoms;

X, where present, is the residue of a polymerisable comonomer which can be reacted under

polymerisation conditions with a 1,2-disubstituted-cyclohexa-3,5-diene in which the 1,2-substituents are not hydroxy groups and do not unduly inhibit polymerisation of the 1,2-disubstitutedcyclohexa-3,5-diene; n and m are whole numbers or m is 0 and the ratio of n:m lies in the range 1:0 to 1:100.

6. A process as claimed in claim 1 wherein the polymer is subjected to a heat treatment in step B.

7. A process as claimed in any one of the preceding claims wherein the acyl group is an aroyl group or an alkanoyl group having up to eight carbon atoms and lacking a hydrogen atom on the carbon atom adjacent the carboxy group, or $R^2$ is an aryl group or an alkyl group having up to ten carbon atoms.

8. A process as claimed in claim 7 wherein $R^2$ is methyl.

9. A method as claimed in claim 1 wherein step B is catalysed by an alkylamine.

10. A method as claimed in claim 1 wherein the doping step C is carried out by treating the polyarylene with a solution of the doping agent.

11. A method as claimed in claim 1 wherein the polyarylene used in step C is in the form of a substantially continuous two dimensional solid.

**Patentansprüche**

1. Verfahren zur Herstellung eines Gemischs mit einem Gleichstromleitvermögen von mindestens $10^{-5}$ $Ohm^{-1}$ $cm^{-1}$, gemessen bei Raumtemperatur durch die Vier-Sonden-Methode, wobei dieses Verfahren die folgenden Schritte enthält:

A) Behandlung eines polymerisierbaren Gemischs, das ein 1,2-disubstituiertes Cyclohexa-3,5-dien enthält, unter Polymerisationsbedingungen für das polymerisierbare Gemisch, wobei diese 1,2-Substituenten, die gleich oder verschieden sein können, keine Hydroxylgruppen sind und die Polymerisation des polymerisierbaren Gemischs nicht übermäßig hemmen und aus Acyloxy-, Carbonat-, Alkoxy-, Amid-, Halogenid-, Thioester-, Urethan- und Xanthat-Substituenten ausgewählt sind;

B) Behandlung des in Schritt A hergestellten Polymers, das in der Polymer-Hauptkette 1,2-disubstituierte Cyclohexenylenringe aufweist, zum Eliminieren der 1,2-Substituenten und zum Umwandeln der Cyclohexenylenringe in Arylenringe, und

C) Dotieren des in Schritt B hergestellten Polyarylens mit einem Dotiermittel, das aus der Gruppe ausgewählt ist, die aus Metallen der Gruppe IA, Metallarenen von Metallen der Gruppe IA, Brönsted-Säuren, Nichtmetalloxiden, Sulfiden der Gruppe VB und Halogeniden der Gruppen VB, VIA, IB, IIIB, IVB und der Edelgase besteht.

2. Verfahren nach Anspruch 1, bei dem das 1,2-disubstituierte Cyclohexa-3,5-dien, das in Schritt A verwendet wird, eine Struktur hat, die durch die allgemeine Formel:

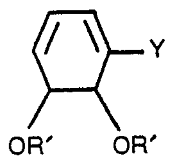

wiedergegeben wird, worin jedes $R^1$, die gleich oder verschieden sein können, Acyl oder $R^2OCO$ ist, worin $R^2$ Aryl oder eine Alkylgruppe mit bis zu zehn Kohlenstoffatomen ist, und Y Wasserstoff, Halogen oder eine Alkylgruppe mit bis zu vier Kohlenstoffatomen ist.

3. Verfahren nach einem der vorhergehenden Ansprüche, bei dem das polymerisierbare Gemisch ein polymerisierbares Comonomer enthält, das unter Polymerisationsbedingungen mit einem 1,2-disubstituierten Cyclohexa-3,5-dien, das 1,2-Substituenten hat, wie sie in Anspruch 1 definiert sind, umgesetzt werden kann, um damit ein Copolymer zu bilden.

4. Verfahren nach Anspruch 3, bei dem das polymerisierbare Comonomer Methylmethacrylat, Styrol oder Acrylnitril ist.

5. Verfahren nach einem der vorhergehenden Ansprüche, bei dem das Polymer, das in Schritt B verwendet wird und das in der Polymer-Hauptkette 1,2-disubstituierte Cyclohexenylenringe aufweist, eine Struktur hat, die durch die allgemeine Formel:

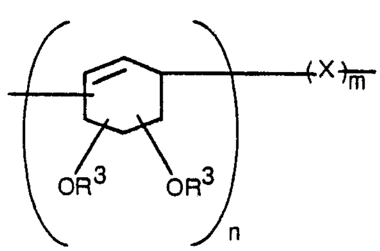

wiedergegeben werden kann, worin die Cyclohexenylenringe und der Rest X, wenn X vorhanden ist, längs der Polymerkette von Struktureinheit zu Struktureinheit verschieden sein können;

$R^3$, von dem jedes gliech oder verschieden sein kann, Wasserstoff, Acyl oder $R^2OCO$ ist, worin $R^2$ Aryl oder eine Alkylgruppe mit bis zu zehn Kohlenstoffatomen ist;

X, wenn es vorhanden ist, der Rest eines polymerisierbaren Comonomers ist, das unter Polymerisationsbedingungen mit einem 1,2-disubstituierten Cyclohexa-3,5-dien, in dem die 1,2-Substituenten keine Hydroxylgruppen sind und die Polymerisation des 1,2-disubstituierten Cyclohexa-3,5-diens nicht übermäßig hemmen, umgesetzt werden kann;

n und m ganze Zahlen sind oder m 0 ist und das Verhältnis n:m in dem Bereich von 1:0 bis 1:100 liegt.

6. Verfahren nach Anspruch 1, bei dem das Polymer in Schritt B einer Hitzebehandlung unterzogen wird.

7. Verfahren nach einem der vorhergehenden Ansprüche, bei dem die Acylgruppe eine Aroylgruppe oder eine Alkanoylgruppe mit bis zu acht Kohlenstoffatomen, die an dem Kohlenstoffatom, das der Carboxylgruppe benachbart ist, kein Wasserstoffatom aufweist, ist oder $R^2$ eine Arylgruppe oder eine Alkylgruppe mit bis zu zehn Kohlenstoffatomen ist.

8. Verfahren nach Anspruch 7, bei dem $R^2$ Methyl ist.

9. Verfahren nach Anspruch 1, bei dem Schritt B durch ein Alkylamin katalysiert wird.

10. Verfahren nach Anspruch 1, bei dem der Dotierungsschritt C durchgeführt wird, indem das Polyarylen mit einer Lösung des Dotiermittels behandelt wird.

11. Verfahren nach Anspruch 1, bei dem das in Schritt C verwendete Polyarylen die Form eines im wesentlichen kontinuierlichen, zweidimensionalen Festkörpers hat.

**Revendications**

1. Procédé de préparation d'une composition ayant une conductivité de courant continu d'au moins $10^{-5}$ $ohm^{-1}$ $cm^{-1}$ mesurée par la méthode d'essai en quatre points à la température ambiante, procédé qui comporte les étapes consistant

(A) à traiter une composition polymérisable qui comprend un cyclohexa-3,5-diène disubstitué en positions 1,2 dans des conditions de polymérisation pour la composition polymérisable, les substituants en positions 1,2, qui peuvent être identiques ou différents, n'étant pas des groupes hydroxy et n'inhibant pas indésirablement la polymérisation de la composition polymérisable et étant choisis entre des substituants acyloxy, carbonate, alkoxy, amide, halogénure, thioester, uréthanne et xanthate;

(B) à traiter le polymère préparé dans l'étape A qui comprend des noyaux cyclohexénylène disubstitués en positions 1,2 dans la chaîne polymérique pour éliminer les substituants en positions 1,2 et pour transformer les noyaux cyclohexénylène en noyaux arylène; et

(C) à doper le polyarylène préparé dans l'étape (B) avec un agent dopant choisi dans la classe comprenant des métaux du groupe IA, des dérivés d'arènes de métaux du groupe IA, des acides de Brönsted, des oxydes non métalliques, des sulfures du groupe VB et des halogénures des groupes VB, VIA, IB, IIIB, IVB et des gaz inertes.

2. Procédé suivant la revendication 1, dans lequel le cyclohexa-3,5-diène disubstitué en positions 1,2 qui est utilisé dans l'étape A a une structure représentée par la formule générale

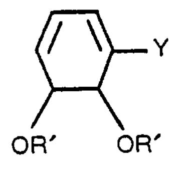

dans laquelle chacun des symboles $R^1$, qui peuvent être identiques ou différents, est un groupe acyle ou un groupe $R^2OCO$, où $R^2$ est un groupe aryle ou un groupe alkyle ayant jusqu'à dix atomes de carbone et Y est l'hydrogène, un halogène ou un groupe alkyle ayant jusqu'à quatre atomes de carbone.

3. Procédé suivant l'une quelconque des revendications précédentes, dans lequel la composition polymérisable comprend un comonomère polymérisable qui peut être mis en réaction dans des conditions de polymérisation avec un cyclohexa-3,5-diène qui porte en positions 1,2 des substituants tels que définis dans la revendication 1, pour former un copolymère avec lui.

4. Procédé suivant la revendication 3, dans lequel le comonomère polymérisable est le méthacrylate de méthyle, le styrène ou l'acrylonitrile.

5. Procédé suivant l'une quelconque des revendications précédentes, dans lequel le polymère qui est utilisé dans l'étape B et qui comprend des noyaux cyclohexénylène disubstitués en positions 1,2 dans la chaîne polymérique a une structure qui peut être représentée par la formule générale:

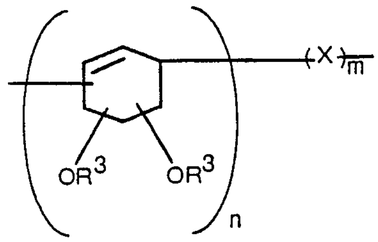

dans laquelle les noyaux cyclohexénylène et le résidu X, lorsque X est présent, peuvent varier d'un motif à un autre le long de la chaîne polymérique;

les symboles $R^3$, qui peuvent être identiques ou différents, représentent l'hydrogène, un groupe acyle ou un groupe $R^2OCO$ dans lequel $R^2$ est un groupe aryle ou un groupe alkyle ayant jusqu'à dix atomes de carbone;

X, lorsqu'il est présent, est le résidu d'un comonomère polymérisable qui peut être amené à réagir dans des conditions de polymérisation avec un cyclohexa-3,5-diène 1,2-disubstitué dont les substituants en positions 1,2 ne sont pas des groupes hydroxy et n'inhibent pas indésirablement la polymérisation du cyclohexa-3,5-diène 1,2-disubstitué;

n et m sont des nombres entiers ou bien m est égal à 0 et le rapport n:m se situe dans l'intervalle de 1:0 à 1:100.

6. Procédé suivant la revendication 1, dans lequel le polymère est soumis à un traitement thermique dans l'étape B.

7. Procédé suivant l'une quelconque des revendications précédentes, dans lequel le groupe acyle est un groupe aroyle ou un groupe alcanoyle ayant jusqu'à huit atomes de carbone et ne présentant pas d'atome d'hydrogène sur l'atome de carbone adjacent au groupe carboxy, ou bien $R^2$ est un groupe aryle ou un groupe alkyle ayant jusqu'à dix atomes de carbone.

8. Procédé suivant la revendication 7, dans lequel $R^2$ est un groupe méthyle.

9. Procédé suivant la revendication 1, dans lequel l'étape B est catalysée par une alkylamine.

10. Procédé suivant la revendication 1, dans lequel l'étape de dopage C est conduite par traitement du polyarylène avec une solution de l'agent dopant.

11. Procédé suivant la revendication 1, dans lequel le polyarylène utilisé dans l'étape C est sous la forme d'un corps bidimensionnel solide sensiblement continu.